(19) **Europäisches Patentamt European Patent Office Office européen des brevets**

(11) **EP 1 865 726 A1**

(12) # EUROPEAN PATENT APPLICATION

(43) Date of publication:
**12.12.2007 Bulletin 2007/50**

(51) Int Cl.:
***H04N 7/26*** *(2006.01)*

(21) Application number: **07102176.0**

(22) Date of filing: **12.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.06.2006 US 448373**

(71) Applicant: **Samsung Electronics Co., Ltd.**
**Suwon-si**
**442-742 Gyeonggi-do (KR)**

(72) Inventors:
• **Lee, Sang-Keun**
**California 92614 (US)**
• **Kim, Yeong-taeg**
**California 92620 (US)**

(74) Representative: **Brandon, Paul Laurence**
**APPLEYARD LEES**
**15 Clare Road**
**Halifax HX1 2HY (GB)**

(54) **A Method and Device for Measuring MPEG Noise Strength of Compressed Digital Image**

(57)    A method and system is provided for estimating the strength of block artifacts at each block boundary, based on global and local edge statistics computed from the input image (frame or field picture) in the spatial domain. Such a method systemically measures the strength of the compression artifacts that are associated with block-based compression/coding schemes such as JPEG, MPEG, and H.26x.

FIG. 1

FIG. 2

**Description**

The present invention relates generally to digital image processing, and more particularly to removing compression noise from compressed image/video.

Compression (coding) noise reduction, such as MPEG noise reduction, is one of main functions implemented by a post-processor in display devices such as TV sets. Digital video contents may be processed and encoded by a variety of digital compression techniques to overcome compression noise with data bandwidth limitation in communication networks.

The current Digital TV (DTV) broadcasting in the United States uses the MPEG-2 international video compression standard to compress digital video contents. DVD video contents are also processed by MPEG-2. High definition (HD) contents may be processed by MPEG-2, MPEG-4, or H.264. These compressed digital videos contain varying degrees of artifacts that deteriorate the quality of displayed video images and scenes. These artifacts in MPEG-processed digital videos are referred to as "MPEG noise", or "compression noise" in the description herein. Compression noise reduction is then a process that detects and removes/reduces these annoying MPEG noises from the digital videos before displaying to the screen.

Further, block artifacts are appearances of undesired, superfluous edges or discontinuities at block boundaries in images. Block artifacts arise in images/videos that are compressed by block-based coding schemes such as JPEG, MPEG, and H.26X. In these coding schemes, a picture is divided into an array of N-by-N rectangular blocks (N is usually 16) that are called macroblocks. Then, each macroblock is again sub-divided into M-by-M (M is usually 8) sub-blocks. Each sub-block is typically processed by an 8-by-8 Discrete Cosine Transform (DCT), Quantization, Zig-zag scanning, and Entropy coding, independently of other sub-blocks.

Because each sub-block (and each macroblock) is processed independently, a critical portion of the image/video data that connects neighboring blocks is often lost and superfluous edges and discontinuities appear at the block boundaries. Block artifacts become more severe as the image/video is compressed more, i.e., at higher compression rates.

There are several approaches for reducing compression noise. Such approaches involve estimating the artifact strength and reducing the artifacts according to the measured values.

Block artifacts appear with varying strengths at different spatial locations within a coded image. If a single deblocking filter is uniformly applied to all block boundaries, either the strong block artifacts are not adequately reduced or fine image features are blurred.

According to the present invention, there is provided a method of measuring strength of block-based encoding noise in a decoded digital image frame, comprising the steps of:

receiving a decoded image frame; and estimating the strength of encoding noise in the image frame by determining the strength of blocking artifacts at each block boundary.

In one embodiment, the present invention provides a method and system for estimating the strength of block artifacts at each block boundary, based on global and local edge statistics computed from the input image (frame or field picture) in the spatial domain. In one implementation, such a method systemically measures the strength of the compression artifacts that are associated with block-based compression/coding schemes such as JPEG, MPEG, and H.26x.

In one example, a robust and efficient deblocking and deringing method according to the present invention measures the strength of the MPEG noise at each block boundary and adjusts the deblocking/deringing parameters accordingly to improve the performance of the overall process.

An embodiment of the present invention further provides a quality measure of a given image for image/video applications to determine if the input image requires enhancement. In one implementation, first the coded input image is separated into non-overlapped sub-images for estimating local compression noise strength, and then the local parameters from each sub-block are computed. Then noise strength values for local and global parts of image are estimated by using the computed parameters and analyzing the image content activities. The estimated noise strength values are used to determine if the input image requires enhancement such as noise reduction.

An effective method for reducing block artifacts should, according to an embodiment of the present invention, measure the strength of the block artifact at each block boundary and adjust the parameters of the deblocking filter accordingly. As a result, more filtering is applied to strong block artifacts while less filtering is applied to weak block artifacts. An adaptive deblocking filter improves the performance of the overall deblocking process.

Further features of the present invention are set out in the appended claims.

FIG. 1 shows a functional block diagram of an embodiment of an image processing system, according to an embodiment of the present invention.

FIG. 2 shows a functional block diagram of an embodiment of compression noise estimator of FIG. 1, according to an embodiment of the present invention.

FIG. 3 shows an example functional block diagram of an embodiment of the local parameter computation module of FIG. 2, according to an embodiment of the present invention.

FIGS. 4A-B show example Sobel operation in FIG. 3, for vertical and horizontal edge directions, respectively, according to an embodiment of the present invention.

FIG. 5 shows a functional flow for measuring MPEG noise strength of compressed digital images, according to an embodiment of the present invention.

In the drawings, like references refer to similar elements.

In one preferred embodiment, the present invention provides a method and system for measuring encoding noise strength in a compressed digital image frame. Further, preferred embodiments of the present invention provides a method and system for estimating the strength of blocking artifacts at each block boundary, based on global and local edge statistics computed from the input image (frame or field picture) in the spatial domain. In one implementation, such a method systemically measures the strength of the compression artifacts that are associated with block-based compression (coding) schemes such as JPEG, MPEG, and H.26x.

Local and global compression noise information is estimated for a decoded digital image in the pixel domain without any prior knowledge of the original compressed image. Such noise information is determined based on local and global edge statistics around block edge boundaries, caused by image compression, are computed from the input image (frame or field picture) in the spatial domain.

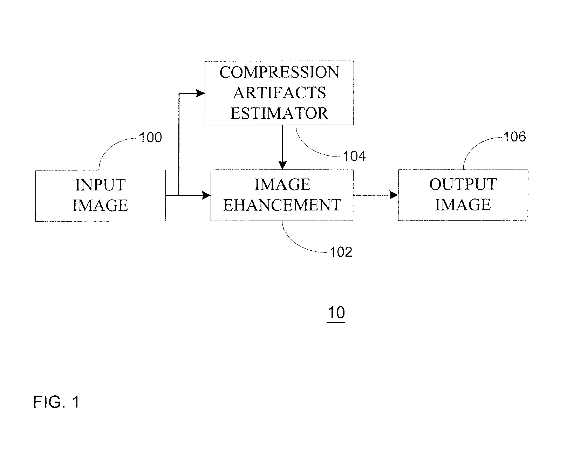

**FIG. 1** shows a functional block diagram of an image processing system 10 implementing a method of measuring MPEG noise strength of compressed digital image for image enhancement, according to an embodiment of the present invention. The system 10 receives decompressed (decoded) input image in an input processor 100, and enhances the image in the image enhancer 102 to generate enhanced output image passed to the output image processor 106. Enhancement in the image enhancer 102 is a function of an estimate of compression artifacts determined by the compression artifacts estimator 104, according to an embodiment of the present invention. The process implemented in the system 10 is described in more detail below.

Color video signals usually comprise three color channels, i.e. a luminance (Y) channel and two chrominance (U, V) channels. Generally compression strength parameter estimation according to the present invention is only required to be performed on the luminance channel.

Typically eight bits are used to represent the Y value for bandwidth efficiency and memory design considerations. Therefore, conventional image processing systems assign each pixel a Y value somewhere in the range of 0 to 255, with 0 representing the darkest luminance and 255 representing the brightest luminance. Performing compression strength parameter estimation on the chrominance channels (U, V) have no (or little) noticeable effect on estimating a quantization parameter.

In the system 10, the decoded luminance data is read in from a buffer in the processor 100 to the image enhancer 102. At this stage, the image enhancer 102 improves the input data (e.g., filters luminance data), based on the output of the compression noise estimator 104. The enhanced (filtered) luminance data from the enhancer 102 is the output back to the processor 106 for combination with the decoded data from the two chrominance channels before display.

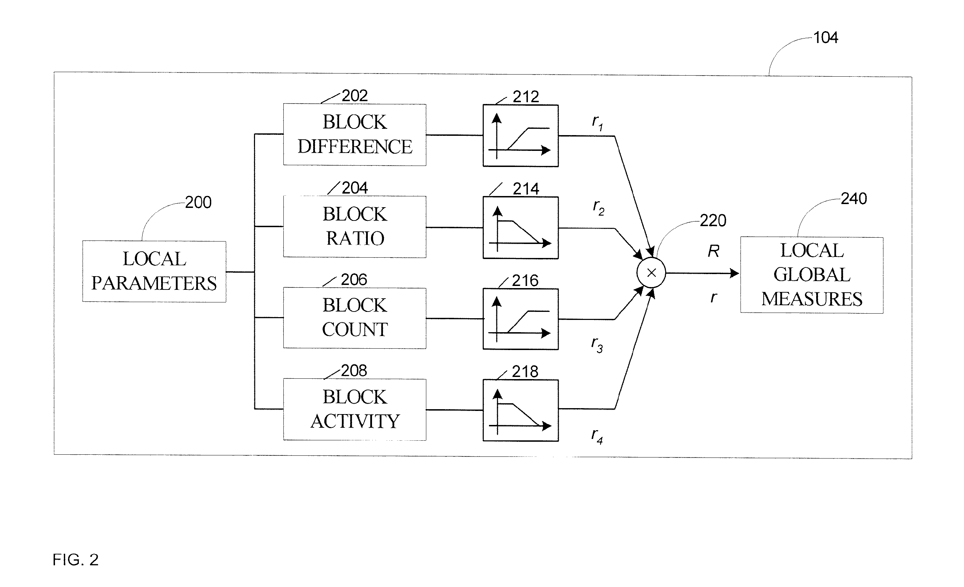

**FIG. 2** shows a functional block diagram of an embodiment of compression noise estimator 104 of FIG. 1, implementing a method of estimating the strength of compression noise, according to an embodiment of the present invention. The estimator 104 estimates strength of blocking artifacts (compression noise) by analyzing the block edge statistics. The input to estimator 104 is input image 100 and the output of estimator 104 is estimated artifacts level for controlling image enhancement block 102.

The control values of deblocking or deringing process are adjusted in enhancer 102 according to the estimated strength of block artifacts in estimator 104.

First, local parameters are obtained by local parameter computation module 200 (described further below). Parameters for local information are the same as global parameters. Local parameters represent degree of block artifacts in local area while global parameters indicate the degree of block artifacts over the entire area of input image. In one example, such parameters include block difference, block ratio, block count, and block activity.

Then, using the local parameters, a difference module 202 determines a block difference indicator, a ratio module 204 determines a block ratio indicator, a counter module 206 determines a block count indicator, and an activity module 208 determines a block activity indicator. The modules 202, 204, 206 and 208 are described further below.

The block difference indicator, the block ratio indicator, the block count indicator, and the block activity indicator, are computed by using block edge statistics of the input image frame, based on the local parameters.

Each parameter is computed globally for the entire input image frame, and then again locally for each of N-by-N non-overlapped sub-sections of the image frame. A sub-section if a small portion of an input image.

The local information, comprising the local parameters computed in each sub-section area, is useful when blocking artifacts appear only on parts of the input image, for example, due to high motion of localized regions / objects.

For each sub-block of the input image frame, the block difference indicator, the block ratio indicator, the block count indicator, and the block activity indicator, are input to weighting function modules 212, 214, 216 and 218, respectively. The weighting function modules 212, 214, 216 and 218, generate weighing factors $r_1$, $r_2$, $r_3$, and $r_4$, respectively. As such, the weighing factors $r_1$, $r_2$, $r_3$, and $r_4$, correspond to the block difference indicator, the block ratio indicator, the block count indicator, and the block activity indicator, respectively.

Then, the obtained weighting factors are $r_1$, $r_2$, $r_3$, and $r_4$ are combined (e.g., multiplied) together in a combiner (e.g., multiplier) 220 to generate estimate of strength of the compression noise, R , wherein R is for global information while r is for local information (they may not be same). In one example, obtained strength of the compression noise ranges e.g. from 0 to 1, wherein 0 indicates low compression noise, while 1 indicates high compression noise (e.g., severe blocking artifacts).

In the example implementations of the present invention described herein, the number of local noise strength indicators, r, are N-by-N because the input image frame is separated into N-by-N non-overlapped subsections (i.e., sub-images), but only one global strength indicator, R, is generated for an entire image frame.

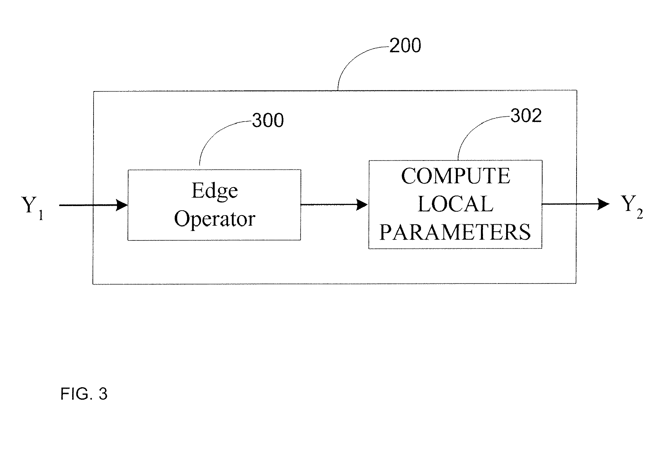

**FIG. 3** shows an example functional block diagram of an embodiment of the local parameter computation module 200 of FIG. 2. The module 200 comprises an edge operator 300 and a local parameter generator 302. In this example, the edge operator 300 applies a Sobel edge operation (or any other appropriate edge operation), to each pixel of the input image $Y_1$ (luminance) in the horizontal direction and the vertical direction. Then, local information is calculated for that pixel in local parameter generator 302 as $Y_2$ (numerical value) for further processing. The local parameters are computed in module 302 as described below. In one example, block difference is computed by averaging of summing all of the values at block boundaries.

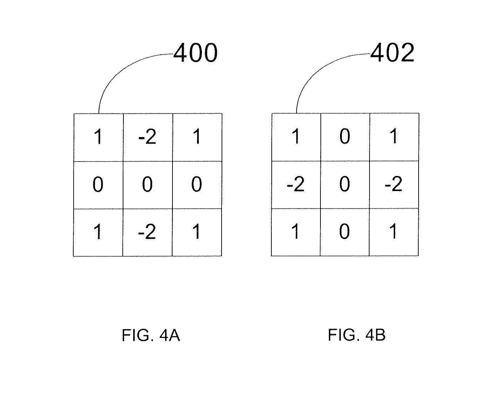

**FIGS. 4A-B** show example Sobel operation in FIG. 3, for vertical and horizontal edge directions, respectively, according to an embodiment of the present invention.

Referring back to FIGS. 2-3, the difference module 202 determines said block difference indicator as the average magnitude of difference of edge pixels located at block boundaries. The block difference indicator computed by averaging the output values of the Sobel edge operator (detector) 300 that are within a selected range ($a$, $b$), wherein $a$ and b are thresholds to select values in proper range. Signal discontinuity appears at block boundary if there are block artifacts. To differentiate from real signal discontinuity, such as real edge, the upper bound threshold $a$ is used while the lower bound b of the threshold should be greater than 0. A Sobel operator performs a 2-D spatial gradient measurement on an image and so emphasizes regions of high spatial gradient that correspond to edges.

The block edge difference indicator is computed globally or locally for each sub-section (sub-image), wherein: one edge value is computed for the horizontal boundary and another edge value is computed for the vertical boundary in each sub-section (sub-image).

The ratio module 204 computes said block ratio indicator both globally and locally pixel-wise. A pixel is classified as an edge pixel if the output of the edge operator 300 falls within a given range, for example, greater than $a$ but less than $b$. Then the total number of edge pixels in the image is counted as follows. The columns of input image are separated into 8 groups according to an index i = ($x$ % 8) = 0 ... 7, where $x$ is the column number and % is a modulo operation. The number of edge pixels is counted separately for each group i = 0 ... 7. Then, a block count $BC_b$ is determined for the column located at the block boundary i = 7, and another block count $BC_m$ is determined as the largest count value in the 8 groups besides the one at the block boundary. The block counter $BC_b$ with another counter $BC_m$ computes block ratio. $BC_m$ represents the largest count value and is used when the block ratio is computed with $BC_b$. That block ratio indicates degree of complexity of image for global information or a sub-section for local information.

The block ratio indicator is then determined as the ratio between the two counts (i.e., $BC_m$ divided by $BC_b$). If $BC_b$ at the block boundary is the largest number in the 8 groups, the second largest number is assigned to $BC_m$. The block ratio indicator is smaller than unity in this case. Otherwise, the block ratio indicator is greater than unity. The above steps are repeated to obtain the block ratio along the vertical direction for rows of input image.

The counter module 206 determine said block count indicator as the total number of edge pixels located at block boundaries. The block count indicator is computed globally or locally for each sub-section (sub-image), wherein: a block edge count is computed for the horizontal boundary and another block edge count is computed for the vertical boundary in each sub-image.

The activity module 208 determines said block activity indicator globally or locally, for the sub-section (sub-images), wherein: block activity is computed by counting the number of sign changes in pixel difference values within the (sub-sections) sub-images for the vertical and the horizontal directions. It is noted that the block activity is measured within the blocks (calculated inside blocks of sub-section), not at the block boundaries. If the number of sign changes is higher than threshold, it indicates that the content of the sub-image is complex and the processing for removing artifacts should be weak.

The block ratio indicator indicates the presence and extent of blocking artifacts. If the block ratio indicator is large, e.g., greater than 3/4, a negligible amount of blocking artifacts is expected because the discontinuity of block boundary is not so higher than other internal blocks. As the block ratio indicator decreases, more blocking artifacts are likely to appear across all block boundaries in the sub-section (sub-image).

Generally, a large block edge value (determined based on a threshold but having possible experimental values), indicates that real edge features are present at block boundaries across the sub-section sub-sections. In that situation, preferably any strong filtering operation that smoothes out the block boundaries, is avoided. However, if the block ratio indicator is very small, the large block edge value indicates that the block artifacts are very strong and there is a large difference in pixel values across the block boundaries.

Similarly, a large block count indicator indicates that many edge features (the edge features may be real edge or block artifacts) are present at block boundaries. If the block ratio indicator is small, a large block count indicator indicates that many block artifacts exist. If the block ratio indicator is large, a large edge block count value (block count indicator) indicates that the image has many edge features near block boundaries.

The above four parameters (i.e., block difference, ratio, count, and activity indicators), describing the block edge content of the image, when combined, provide useful information because each parameter indicates the situation of image, and if they are considered together, they will provide control values (R and r in this case) to the following image enhancer such as de-blocking process. The strength and extent of blocking artifacts can be estimated with appropriate thresholds since said four parameters take a value ($r_1$ to $r_4$) indicating the degree of block artifacts (0 is for no block artifacts while 1 for severe block artifacts), from the weighting function modules 212 to 218.

An example weighting function f(x), implemented by weighting function modules 212 and 216 can be represented as:

$$f(x) = \begin{cases} 1, \text{ if } x < \tau_1, \\ \frac{1}{(\tau_2 - \tau_1)} \cdot (x - \tau_2), \text{ else if } x < \tau_2, \\ 0, \text{ otherwise.} \end{cases}$$

where, x is an input value for each parameter (i.e., block difference, block ratio, block count, and block activity). The values $\tau_1$ and $\tau_2$ are first and second thresholds, respectively. The shapes of the weighting functions for modules 212 and 216 are same except the thresholds. Similarly, the weighting functions for modules 214 and 218 are defined by 1-f(x). Further, the shapes of those weighting functions for modules 214 and 218 are same except for said thresholds.

The local compression noise strength r is obtained by multiplying all of the weighting factors ($r_1$, $r_2$, $r_3$, and $r_4$) together in the multiplier 220, and the global compression noise strength R is computed by multiplying, the averaged value of each estimated strength factor, $R_i$, for a whole image frame as:

$$R = \prod_i^4 R_i$$

where, $R_i$ is the average value for each $i^{th}$ estimated strength factor (i=1, ..., 4) and defined by:

$$R_i = \frac{1}{N \cdot N} \sum_{m=1}^{N} \sum_{n=1}^{N} r_i^{mn},$$

where $r_i^{mm}$ is the $i^{th}$ weighting factor located at (m, n) sub-section. The indices (m, n) indicates the location of sub-section in an image.

It is noted that in order to obtain global information, same procedures as local information can be applied except separating an image into several non-overlapping sections. As such, the procedures to obtain compression noise strength R strength factor, $R_i$, are same as the procedures to obtain local information (parameters) above, except separating an input image into several sub-sections.

Finally, the computed global R and local r values (for global and local information) are used for further image processing (e.g., deblocking or deringing in the enhancer 102 of Fig. 1). Strong filtering operation that smoothes out the block boundaries, is avoided when estimated artifact strength is low. In practice, the range of each of values R and r is 0 to 1 if all other parameters $r_x$ and $R_X$ for x = 1...4 are in 0 to 1. Value 0 indicates that there are no block or ringing artifacts in the given input image and no need to smooth out the boundaries, while a value 1 indicates that strong block or ringing artifacts exist in the given image, and strong filtering for blocking or ringing is required.

The computed global R and local r values are useful in reducing coding artifact in a decoded video sequence such as: reducing blocking artifacts that appear as artificial discontinuities between the boundaries of the blocks due to independent processing of the individual blocks, and reducing mosquito noise (ringing) that mostly appears in image homogeneous regions near strong edges. Module 240 in FIG. 2 indicates global measure R and local measure r that can handle the degree of de-blocking in image enhancer 102.

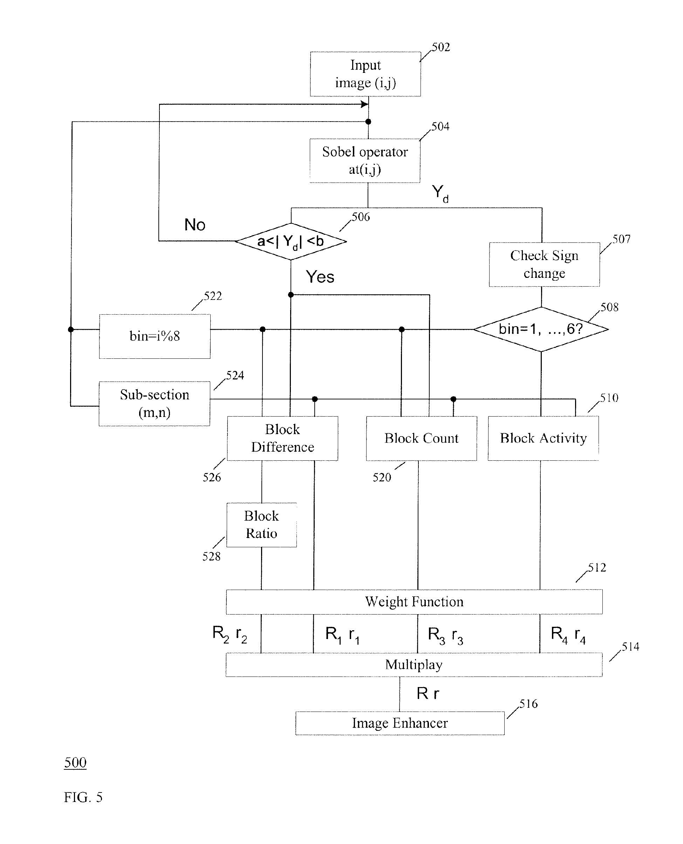

**FIG. 5** shows a functional flow 500 for measuring MPEG noise strength of compressed digital images (such as described above and implemented by example in FIG. 2), according to an embodiment of the present invention. Referring to FIG. 5, an input image is received (process 502), and a Sobel operation is performed on pixel at location (i,j) of the image to determine a pixel difference value $Y_d$ (process 504). It is noted that horizontal operation for the vertical block artifacts is considered here for simple explanation using the following flow chart. Process 506 determines if the absolute value $|Y_d|$ is in a predefined range (e.g., a < $|Y_d|$ < b). If $|Y_d|$ is not in the predefined range, then the process 504 is performed for a next pixel. If $|Y_d|$ is in the predefined range, then block difference and block count values are determined by processes 526 and 520, respectively.

Further, in process 507, sign change checking for $Y_d$ is performed on columns only within the block (bin = 1,...,6) in process 508 and the results are used by process 510 to determine block activity global and local information. Process 508 checks and collects information for incoming pixel location inside a block (bin = 1,2, ..., 6). In other words, the pixel locations of block boundary (bin=0 and 7) are excluded to test in-block activity using sign changes. Process 522 places and stacks information into 8 bins according only to the column number i for analyzing block artifacts for a whole or sub-sectioned image (m,n) in process 524.

The value $Y_d$ is used in block difference process 526 and block count process 520 that further taken into account column location "bin" and sub-section location "(m,n)" for the local block artifacts information. It is worth noting that global block artifacts information is measured without splitting the image into sub-sections (m,n).

After finishing column-wise processing, process 528 determines block ratio using the value of $8^{th}$ and $7^{th}$ bins. The value of block difference, block count, and block activity re-processed in weighting process 512 to generate global indicators $R_1$, $R_2$, $R_3$, $R_4$, and corresponding local indicators $r_1$, $r_2$, $r_3$, $r_4$, respectively. Then process 514 determines global block artifact strength factor R is determined based on combination (multiplication) of global indicators $R_1$, $R_2$, $R_3$, $R_4$; and local block artifact strength factor r is determined based on combination (multiplication) of local indicators $r_1$, $r_2$, $r_3$, $r_4$. Then, in process 516, image enhancement.

While the present invention is susceptible of embodiments in many different forms, these are shown in the drawings and herein described in detail, preferred embodiments of the invention with the understanding that this description is to be considered as an exemplification of the principles of the invention and is not intended to limit the broad aspects of the invention to the embodiments illustrated. The aforementioned example architectures above according to the present invention can be implemented in many ways, such as program instructions for execution by a processor, as logic circuits, as ASIC, as firmware, etc., as is known to those skilled in the art. Therefore, the present invention is not limited to the example embodiments described herein.

The present invention has been described in considerable detail with reference to certain preferred versions thereof; however, other versions are possible. Therefore, the spirit and scope of the appended claims should not be limited to the description of the preferred versions contained herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of measuring strength of block-based encoding noise in a decoded digital image frame, comprising the steps of:

   receiving a decoded image frame; and estimating the strength of encoding noise in the image frame by determining the strength of blocking artifacts at each block boundary.

2. The method of claim 1 wherein the step of estimating further includes the steps of:

   determining edge statistics from the image frame in the spatial domain, and estimating the strength of blocking artifacts at each block boundary based on the edge statistics.

3. The method of claim 2 wherein the step of determining edge statistics further includes the steps of determining global and local edge statistics from the image frame in the spatial domain.

4. The method of claim 3 wherein the step of determining edge statistics further includes the steps of estimating global and local edge statistics in the pixel domain without any prior knowledge of the original compressed image.

5. The method of claim 3 wherein the step of determining edge statistics further includes the steps of:

for the image frame, determining:

a block difference indicator computed using block edge statistics,
a block ratio indicator computed on block edge statistics,
a block count indicator computed on block edge statistics, and
a block activity indicator computed on block edge statistics.

6. The method of claim 5 further comprising the steps of determining said indicators globally for the entire image frame.

7. The method of claim 5 or claim 6 further comprising the step of determining said indicators locally for each of N-by-N non-overlapped portions of the image frame.

8. The method of any one of claims 5-7 wherein the step of estimating the strength of blocking artifacts further includes the steps of estimating the strength of blocking artifacts at each block boundary based on one or more of said indicators.

9. The method of any one of claims 5-8 wherein the block difference indicator comprises an average magnitude of edge pixels located at block boundaries.

10. The method of claim 9 wherein the block difference indicator is computed by averaging resulting values of a Sobel edge operation.

11. The method of any one of claims 5-10 wherein the block ratio indicator indicates the presence and extent of blocking artifacts.

12. The method of claim 11 wherein block ratio indicator comprises the ratio: $BC_m$ divided by $BC_b$.

13. The method of any one of claims 5-12 wherein the block count indicator comprises the total number of edge pixels located at block boundaries.

14. The method of any one of claims 5-13 wherein the block activity indicator comprises a count of the number of sign changes within the sub-sections.

15. The method of any one of claims 5-14 further comprising the steps of:

generating a weighting factor for each of said indicators, and
combining one or more of the weighting factors to generate the strength of the compression noise.

16. The method of claim 15 further comprising the steps of combining the weighting factors to generate the strength of the compression noise.

17. An image enhancement system (10) for reducing block-based encoding noise in a decoded digital image frame, comprising:

an estimator (104) that measures strength of block-based encoding noise in a decoded digital image frame by determining the strength of blocking artifacts at each block boundary, and
an enhancer (102) that reduces block-based encoding noise in the image frame as a function of the strength of blocking artifacts, to generate an enhanced image.

18. The system (10) of claim 17 wherein the enhancer (102) performs a deblocking operation.

19. The system (10) of claim 17 wherein the enhancer (102) performs a deranging operation.

20. The system (10) of claim 17 wherein the enhancer (102) enhances image luminance channel.

21. The system (10) of claim 20 further comprising a processor that combines the enhanced luminance channel with chrominance channels, before display.

22. The system (10) of claim 17 wherein the estimator determines edge statistics from the image frame in the spatial domain, and estimate the strength of blocking artifacts at each block boundary based on the edge statistics.

23. The system (10)_ of claim 22 wherein the estimator (104) determines global and local edge statistics from the image frame in the spatial domain.

24. The system (10) of claim 23 wherein the estimator (104) determines the edge statistics by determining:

a block difference indicator computed using block edge statistics,
a block ratio indicator computed on block edge statistics,
a block count indicator computed on block edge statistics, and
a block activity indicator computed on block edge statistics.

25. The system (10) of claim 24 wherein the estimator (104) estimates strength of block-based encoding noise based on said indicators.

COMPRESSION
ARTIFACTS
ESTIMATOR

—100

—104

INPUT
IMAGE

IMAGE
EHANCEMENT

OUTPUT
IMAGE

—106

—102

10

FIG. 1

LOCAL PARAMETERS 200

BLOCK DIFFERENCE 202

BLOCK RATIO 204

BLOCK COUNT 206

BLOCK ACTIVITY 208

212

214

216

218

$r_1$

$r_2$

$r_3$

$r_4$

220

$\times$

$R$

$r$

LOCAL GLOBAL MEASURES 240

104

FIG. 2

200

300

302

$Y_1$ → Edge Operator → COMPUTE LOCAL PARAMETERS → $Y_2$

FIG. 3

400

| 1 | -2 | 1 |
|---|----|---|
| 0 | 0  | 0 |
| 1 | -2 | 1 |

402

| 1  | 0 | 1  |
|----|---|----|
| -2 | 0 | -2 |
| 1  | 0 | 1  |

FIG. 4A                    FIG. 4B

500

FIG. 5

European Patent Office

**EUROPEAN SEARCH REPORT**

Application Number

EP 07 10 2176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/114685 A1 (KOULOHERIS JACK L [US] ET AL) 17 June 2004 (2004-06-17)<br>* abstract *<br><br>* paragraph [0012] - paragraph [0023]; figures 1,2 *<br>----- | 1-4, 17-23<br>5-16,24, 25 | INV.<br>H04N7/26 |
| X<br><br><br><br><br>A | WO 2005/111938 A (HEWLETT PACKARD DEVELOPMENT CO [US]; SHAKED DORON [IL]; NACHLIELI HILA)<br>24 November 2005 (2005-11-24)<br>* abstract *<br>* paragraph [0020] - paragraph [0033]; claims; figures 1,2 *<br>----- | 1-4, 17-23<br><br><br><br>5-16,24, 25 | |
| X<br><br><br>A | WO 00/22834 A (SNELL & WILCOX LTD [GB]; KNEE MICHAEL JAMES [GB]; DIGGINS JONATHAN [GB] 20 April 2000 (2000-04-20)<br>* abstract *<br><br>* page 2, line 1 - line 14 *<br>* page 4, line 10 - page 8, line 5 *<br>----- | 1-4, 17-23<br><br>5-16,24, 25 | |
| A | WO 2005/060272 A (AGENCY FOR SCIENCE TECHNOLOGY [SG]; ONG EE PING [SG]; LIN WEISI [SG];) 30 June 2005 (2005-06-30)<br>* page 1, line 1 - page 4, line 29 *<br>* page 8, line 25 - page 11, line 15 *<br>----- | 1-24 | |
| A | WO 03/010716 A (HEWLETT PACKARD CO [US])<br>6 February 2003 (2003-02-06)<br>* the whole document *<br>----- | 1-24 | |
| A | US 6 389 177 B1 (CHU KE-CHIANG [US] ET AL) 14 May 2002 (2002-05-14)<br>* the whole document *<br>* column 2, line 1 - line 32; claims *<br>----- | 1-24 | |
| | -/-- | | |

| TECHNICAL FIELDS SEARCHED (IPC) |
|---|
| H04N |

The present search report has been drawn up for all claims

| Place of search | Date of completion of the search | Examiner |
|---|---|---|
| Berlin | 20 September 2007 | Gries, Thomas |

EPO FORM 1503 03.82 (P04C01)

**European Patent Office**

**EUROPEAN SEARCH REPORT**

Application Number

EP 07 10 2176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 168 823 A (EASTMAN KODAK CO [US]) 2 January 2002 (2002-01-02) * the whole document * | 1-24 | |
| A | ZHOU WANG ET AL: "No-reference perceptual quality assessment of JPEG compressed images" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 477-480, XP010607364 ISBN: 0-7803-7622-6 * page 478, right-hand column - page 479, right-hand column * | 1-24 | |
| A | ZHOU WANG ET AL: "Blind measurement of blocking artifacts in images" IMAGE PROCESSING, 2000. PROCEEDINGS. 2000 INTERNATIONAL CONFERENCE ON SEPTEMBER 10-13, 2000, PISCATAWAY, NJ, USA,IEEE, 10 September 2000 (2000-09-10), pages 981-984, XP010529634 ISBN: 0-7803-6297-7 * page 981, right-hand column, paragraph 2 * | 1-24 | **TECHNICAL FIELDS SEARCHED (IPC)** |

The present search report has been drawn up for all claims

| Place of search | Date of completion of the search | Examiner |
|---|---|---|
| Berlin | 20 September 2007 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 2176

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2007

| Patent document cited in search report | | | Publication date | Patent family member(s) | | | Publication date |
|---|---|---|---|---|---|---|---|
| US 2004114685 | A1 | | 17-06-2004 | NONE | | | |
| WO 2005111938 | A | | 24-11-2005 | EP | 1741061 | A2 | 10-01-2007 |
| | | | | US | 2005244061 | A1 | 03-11-2005 |
| WO 0022834 | A | | 20-04-2000 | AT | 295658 | T | 15-05-2005 |
| | | | | AU | 767832 | B2 | 27-11-2003 |
| | | | | AU | 6217799 | A | 01-05-2000 |
| | | | | CA | 2345784 | A1 | 20-04-2000 |
| | | | | DE | 69925296 | D1 | 16-06-2005 |
| | | | | DE | 69925296 | T2 | 23-02-2006 |
| | | | | EP | 1119978 | A2 | 01-08-2001 |
| | | | | JP | 2002528008 | T | 27-08-2002 |
| | | | | US | 6898321 | B1 | 24-05-2005 |
| WO 2005060272 | A | | 30-06-2005 | EP | 1700491 | A1 | 13-09-2006 |
| WO 03010716 | A | | 06-02-2003 | AU | 2002355139 | A1 | 17-02-2003 |
| | | | | EP | 1410334 | A2 | 21-04-2004 |
| | | | | JP | 2005521116 | T | 14-07-2005 |
| | | | | TW | 266253 | B | 11-11-2006 |
| | | | | US | 2003068085 | A1 | 10-04-2003 |
| US 6389177 | B1 | | 14-05-2002 | US | 2002110284 | A1 | 15-08-2002 |
| EP 1168823 | A | | 02-01-2002 | JP | 2002077629 | A | 15-03-2002 |
| | | | | US | 6643410 | B1 | 04-11-2003 |

EPO FORM P0459

For more details about this annex : see Official Journal of the European Patent Office, No. 12/82